# EUROPEAN PATENT APPLICATION

(11) **EP 2 953 147 A1**
(43) Date of publication of application: **09.12.2015**
(21) Application number: 14746579.3
(22) Date of filing: 29.01.2014
(51) Int. Cl.: H01F 38/14, H02J 17/00

(54) **CONTACTLESS POWER TRANSMISSION DEVICE**

(30) Priority: 30.01.2013 JP 2013015070
(71) Applicant: Panasonic Intellectual Property Management Co., Ltd., Osaka-shi, Osaka 540-6207 (JP)
(72) Inventor: OMORI, Yoshiharu, Osaka-shi, Osaka 540-6207 (JP); BESSYO, Daisuke, Osaka-shi, Osaka 540-6207 (JP); FUJITA, Atsushi, Osaka-shi, Osaka 540-6207 (JP); SADAKATA, Hideki, Osaka-shi, Osaka 540-6207 (JP); KURIHARA, Hiroaki, Osaka-shi, Osaka 540-6207 (JP)
(74) Representative: Grünecker Patent- und Rechtsanwälte PartG mbB
(86) International application number: PCT/JP2014/000444
(87) International publication number: WO 2014/119297

(57) **Abstract**

A non-contact power transmission system according to the present invention includes a power transmitting coil 12 and a power receiving coil 18 facing the power transmitting coil. At least one of the power transmitting coil 12 and the power receiving coil 18 includes a first coil 31 in which a wire 30 is wound around a first core 33, and a second coil 32 in which a wire 30 is wound around a second core 33. The second coil 32 is placed at at least one end of a winding axis of the first coil 31. A winding axis of the second coil 32 is inclined with respect to the winding axis of the first coil 31 toward the power transmitting or receiving coil 12 or 18 that faces the second coil.

## Description

### TECHNICAL FIELD

The present invention relates to non-contact power transmission systems for charging, for example, electric propulsion vehicles such as electric vehicles and plug-in hybrid vehicles.

### BACKGROUND ART

PATENT DOCUMENT 1 discloses a conventional power transmitting coil or power receiving coil for a non-contact power transmission system. The coil includes a plurality of cores arranged at some intervals. The plurality of cores output lines of magnetic force filling gaps between themselves. Thus, those cores together function as a single core with an enlarged size, because the overall size of the core includes the sizes of the gaps. This feature allows for addressing the issue of misalignment between the power transmitting and receiving coils and reducing the sizes and weights of the coils.

PATENT DOCUMENT 2 discloses a power transmitting coil or power receiving coil including an H-shaped core having a narrowed portion wound with a coil. The spatial magnetic flux distribution between the power transmitting and receiving coils is determined by the shape of a portion of the core not wound with any coil. Thus, even when the width of the narrowed portion of the H-shaped core is reduced, magnetomotive force of the coil does not change. As a result, such a narrowed portion reduces the size and weight of the power transmitting coil or the power receiving coil.

PATENT DOCUMENT 3 discloses a power transmitting coil and a power receiving coil including an H-shaped core. A portion of the core not wound with any coil is disposed closer to the other core than another portion of the former core wound with the coil is. This reduces the distance between respective portions of the core not wound with any coil, thereby increasing the coefficient of coupling between the coils to improve power supply efficiency.

### CITATION LIST

### PATENT DOCUMENT

[PATENT DOCUMENT 1] Japanese Patent Publication No. 2010-172084
[PATENT DOCUMENT 2] Japanese Patent Publication No. 2011-50127
[PATENT DOCUMENT 3] Japanese Patent Publication No. 2012-151311

### SUMMARY OF THE INVENTION

### TECHNICAL PROBLEM

With respect to a conventional power transmitting coil or power receiving coil, the magnetic flux concentrates along the winding axis of the coil. Thus, if the winding axis of the coil is horizontally placed, the strength of a leakage magnetic field into the environment increases. In particular, an intense magnetic flux diffuses to the vicinity of an end of the core, thereby causing the problem of an even stronger leakage magnetic field into the environment.

The present invention addresses this conventional problem. It is an objective of the present invention to provide a non-contact power transmission system which reduces a leakage magnetic flux into the environment, even if the winding axis of a coil is placed horizontally.

### SOLUTION TO THE PROBLEM

A non-contact power transmission system according to the present invention includes a power transmitting coil, and a power receiving coil facing the power transmitting coil, and transmits electric power from the power transmitting coil to the power receiving coil via a non-contact method by utilizing electromagnetic induction. At least one of the power transmitting and receiving coils includes a first coil in which a wire is wound around a first core, and a second coil in which a wire is around a second core. The second coil is placed at at least one end of a winding axis of the first coil. A winding axis of the second coil is inclined with respect to the winding axis of the first coil toward the power transmitting or receiving coil that faces the second coil.

With this configuration, most of the magnetic flux diffusing horizontally from the end of the first coil (i.e., along the winding axis of the first coil) can be oriented by the second coil upward (i.e., toward the power transmitting/receiving coil that faces the second coil), thereby reducing a leakage magnetic flux into the environment.

### ADVANTAGES OF THE INVENTION

According to the present invention, the second coil orients most of the magnetic flux diffusing from the end of the first coil toward the power transmitting/receiving coil that faces the second coil, thereby reducing a leakage magnetic field into the environment.

### BRIEF DESCRIPTION OF THE DRAWINGS

[FIG. 1] FIG. 1 is a block diagram of a non-contact power transmission system according to an embodiment of the present invention.
[FIG. 2] FIG. 2 illustrates the appearance of a non-contact power transmission system according to an embodiment of the present invention.
[FIG. 3] FIG. 3 is a cross-sectional view of a power transmitting coil according to an embodiment of the present invention.
[FIG. 4] FIG. 4 is a comparison diagram of magnetic flux vectors generated by a coil.
[FIG. 5] FIG. 5 illustrates magnetic flux vectors generated by a coil according to an embodiment of the present invention.
[FIG. 6] FIG. 6 is a partial cross-sectional view of a power transmitting coil according to a first variation of the present invention.
[FIG. 7] FIG. 7 is a partial cross-sectional view of a power transmitting coil according to a second variation of the present invention.
[FIG. 8] FIG. 8 is a partial cross-sectional view of a power transmitting coil according to a third variation of the present invention.

### DESCRIPTION OF EMBODIMENTS

Embodiments of the present invention will now be described with reference to the drawings. Note that the following description of embodiments is not intended to limit the scope of the present invention.

### Embodiments

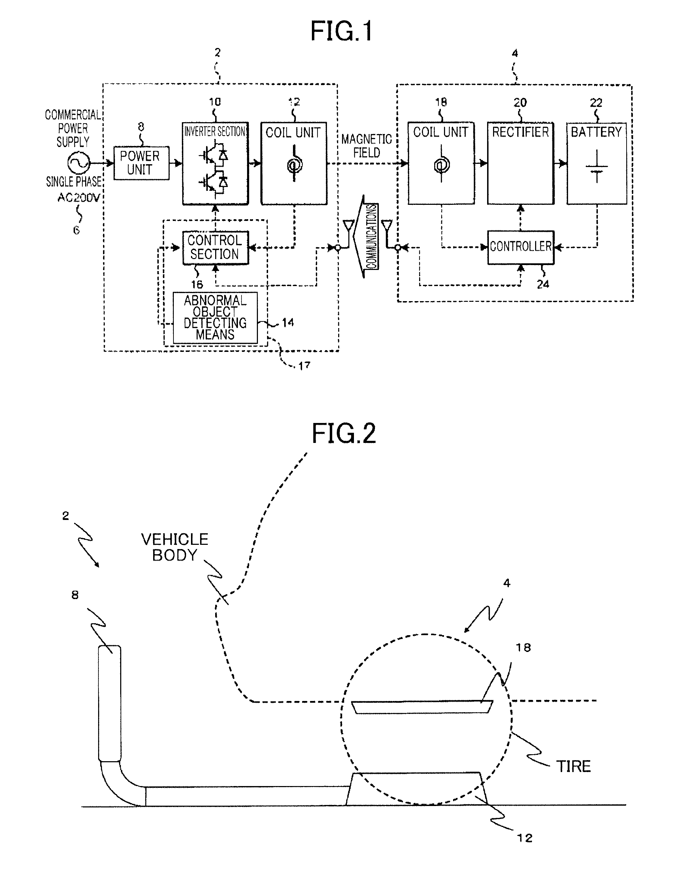

FIG. 1 is a block diagram of a non-contact power transmission system according to an embodiment of the present invention. FIG. 2 illustrates the appearance of the non-contact power transmission system when a vehicle is parked in a parking space.

As shown in FIGS. 1 and 2, the non-contact power transmission system includes, for example, a power supplier 2 in a parking space, and a power receiver 4 mounted on an electric propulsion vehicle.

The power supplier 2 includes a power unit 8, an inverter section 10, a ground-side coil unit (i.e., a power transmitting coil) 12, and a supplier-side controller (e.g., a microcomputer) 16. The power unit 8 is connected to a commercial power supply 6. The supplier-side controller 16 functions as a power control section 17. On the other hand, the power receiver 4 includes a vehicle-side coil unit (i.e., a power receiving coil) 18, a rectifier 20, a battery 22 as a load, and a receiver-side controller (e.g., a microcomputer) 24.

In the power supplier 2, the commercial power supply 6 is a low-frequency AC power supply of 200 V, and connected to the input terminal of the power unit 8. The output terminal of the power unit 8 is connected to the input terminal of the inverter section 10. The output terminal of the inverter section 10 is connected to the ground-side coil unit 12. On the other hand, in the power receiver 4, the output terminal of the vehicle-side coil unit 18 is connected to the input terminal of the rectifier 20. The output terminal of the rectifier 20 is connected to the battery 22.

The ground-side coil unit 12 is placed on the ground. The power unit 8 is set upright, for example, at a predetermined distance from the ground-side coil unit 12. On the other hand, the vehicle-side coil unit 18 is attached to, for example, the bottom of the vehicle (e.g., a chassis).

The supplier-side controller 16 communicates with the receiver-side controller 24. The receiver-side controller 24 determines a power command value in accordance with a detected residual voltage of the battery 22, and sends the determined power command value to the supplier-side controller 16. The supplier-side controller 16 compares the power to be supplied detected by the ground-side coil unit 12 with the received power command value, and drives the inverter section 10 so as to obtain the power command value.

As shown in FIG. 2, when power is supplied from the power supplier 2 to the power receiver 4, the vehicle-side coil unit 18 may be arranged to face the ground-side coil unit 12 by moving the vehicle as appropriate. The supplier-side controller 16 controls the inverter section 10 being driven to generate an RF electromagnetic field between the ground-side coil unit 12 and the vehicle-side coil unit 18. The power receiver 4 extracts electric power from the RF electromagnetic field to charge the battery 22 with the extracted electric power.

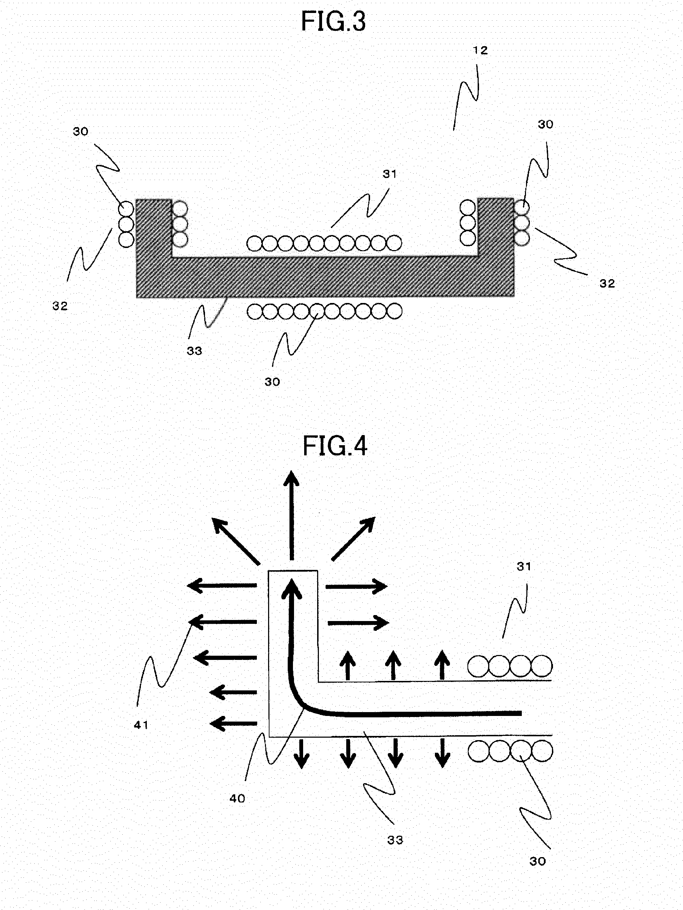

FIG. 3 is a cross-sectional view of the ground-side coil unit (i.e., the power transmitting coil) 12 in the non-contact power transmission system according to an embodiment of the present invention. The vehicle-side coil unit (i.e., the power receiving coil) 18 may have a similar configuration.

As shown in FIG. 3, the ground-side coil unit 12 includes a first coil 31 and second coils 32. The first coil 31 is comprised of a (first) core 33 made of a magnetic material such as ferrite, and a wire 30 wound around the core 33. Each of the second coils 32 is formed at an associated end of the first coil 31 by winding a wire 30 around a (second) core 33. The winding axis of the first coil 31 is placed horizontally. The winding axes of the second coils 32 are placed vertically. The cores 33 of the first and second coils 31 and 32 are formed continuously. Generated magnetic fluxes interlink with the respective coils.

An output from the inverter section 10 is transmitted to the wires 30 of the first and second coils 31 and 32 to generate a magnetic flux. The generated magnetic flux is transmitted through the core 33 and creates magnetic paths going mainly upward (i.e., toward the vehicle-side coil unit 18 that faces the coils) from the end of the second coils 32. The magnetic paths generate an RF electromagnetic field between the ground-side coil unit 12 and the vehicle-side coil unit 18 located above to transmit electric power.

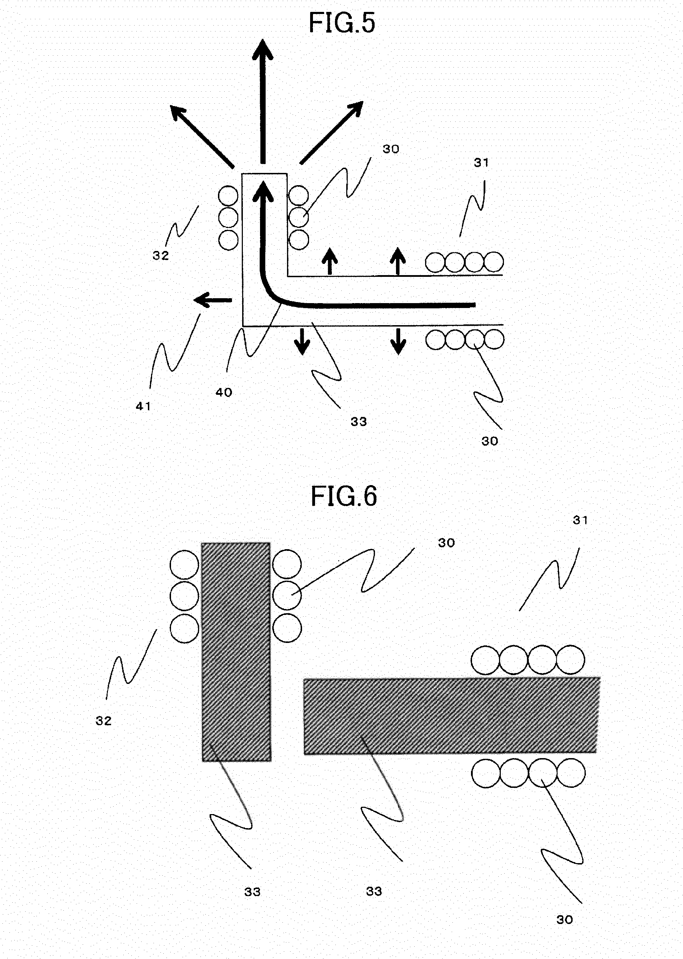

A change in a leakage magnetic flux according to this embodiment will be described with reference to FIGS. 4 and 5.

FIG. 4 is a sectional side view of a comparison example illustrating magnetic flux vectors generated when no second coil 32 is provided. The magnetic flux 40 in the core 33, which has been generated by the wire 30, propagates through the core 33 toward the end of the core 33. In the air, the same magnetic flux density as in the magnetic body cannot be maintained. For that reason, the magnetic flux diffuses from the winding end of the wire 30 to the vicinity of an end of the core 33 in a direction in which the magnetic flux density decreases (e.g., the direction perpendicular to the surface of the core). Thus, most of the magnetic flux 40 generated by the wire 30 in the core diffuses from the vicinity of the end of the core 33. As a result, a leakage magnetic flux 41 particularly significantly increases along the winding axis of the first coil 31 (i.e., in the horizontal direction).

FIG. 5 illustrates magnetic flux vectors generated in this embodiment. In this embodiment as well, the magnetic flux 40 in the core 33, which has been generated by the wire 30 of the first coil 31, goes upward via the core 33 and the second coils 32. However, since there are the second coils 32 of which wires 30 are wound in the same direction as that of the first coil 31, much of the magnetic flux 40 is attracted toward the second coils 32. Thus, the magnetic flux 40 is transmitted through the core 33 to the vicinity of the ends of the second coils 32 with a reduced leakage magnetic flux. As a result, the leakage magnetic flux 41 along the winding axis of the first coil 31 (in the horizontal direction) is reduced as compared to the comparison example.

That is to say, in the non-contact power transmission system according to this embodiment, the power transmitting coil 12 faces the power receiving coil 18. The non-contact power transmission system transmits electric power from the power transmitting coil 12 to the power receiving coil 18 via a non-contact method by utilizing electromagnetic induction. At least one of the power transmitting coil 12 and the power receiving coil 18 includes the first coil 31 formed by winding the wire 30 around the first core, and the second coils 32, each of which is placed at an associated end of the winding axis of the first coil 31 and formed by winding the wire 30 around the second core. The winding axis of each second coil 32 is inclined, with respect to the winding axis of the first coil 31, perpendicularly to the power transmitting or receiving coil 12 or 18 that faces the second coil 32.

### First Variation

FIG. 6 is a partial cross-sectional view of a power transmitting coil (or a power receiving coil) according to a first variation of the present invention. In this variation, the core 33 of the first coil 31 is spaced apart from the core 33 of each second coil 32. If there is a space between the cores 33, the magnetic flux 40 diffuses once at the end of the core 33 of the first coil 31, and then enters the core 33 of the second coil 32. This reduces the magnetic flux diffusing through the core 33 of the second coil 32, thereby further reducing the leakage magnetic flux along the winding axis of the first coil 31 (in the horizontal direction).

### Second Variation

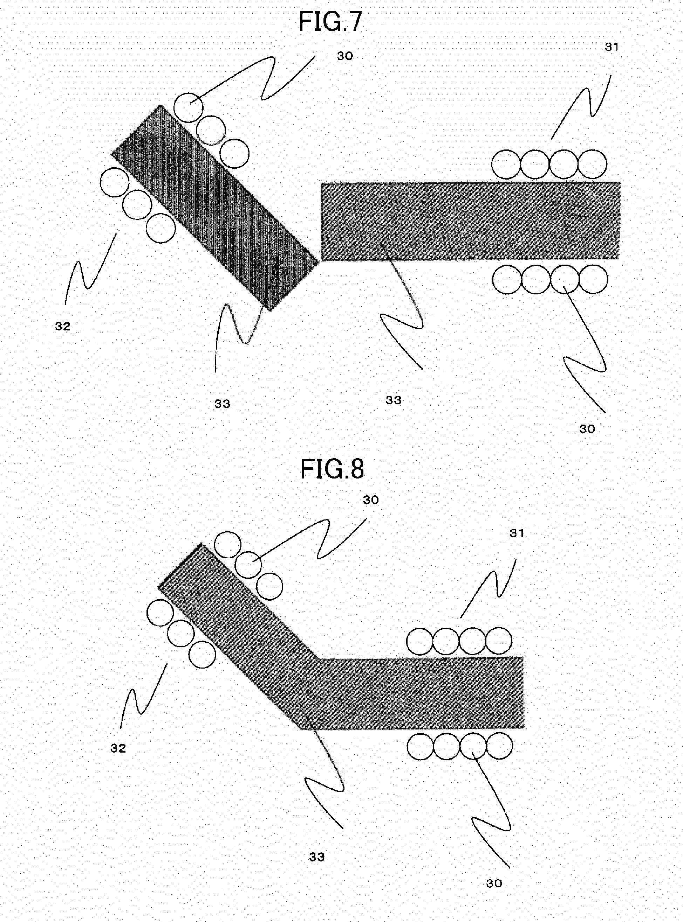

FIG. 7 and FIG. 8 are partial cross-sectional views of a power transmitting coil (or a power receiving coil) according to a second variation of the present invention. In this variation, each second coil 32 is inclined with respect to the vertical direction. As such, the magnetic flux from the end of the second coil 32 is provided in such a direction that broadens the range of the magnetic flux coming from the end of the second coil 32 as compared to the vertical direction, thereby forming a wide RF electromagnetic field. Accordingly, a leakage magnetic flux decreases, and in addition, deterioration in power transmission efficiency caused by misalignment of a vehicle is also reducible.

In this embodiment of the present invention, an example has been described where the wires 30 of the first and second coils 31 and 32 are wound in the same direction and connected in series. As long as magnetic fluxes generated by the coils are oriented in the same direction, any other configuration provides similar advantages. For example, the wires 30 of the first and second coils 31 and 32 may be wound in opposite directions, and the ends of the wire 30 of the first coil 31 may be connected to the wires 30 of the second coils 32 in reverse directions to allow a current to flow in the reverse directions. Even so, the magnetic fields of the second coils 32 are generated in the direction in which the magnetic flux 40 generated by the first coil 31 increases. Thus, this embodiment also provides the advantage of reducing a leakage magnetic flux along the winding axis of the first coil 31 (in the horizontal direction).

In this embodiment of the present invention, an example has been described where the ground-side coil unit 12 includes the first and second coils 31 and 32. The present invention is not limited thereto. For example, in place of this configuration, the vehicle-side coil unit 18 of the power receiver 4 may include the first and second coils 31 and 32. Furthermore, each of the ground-side coil unit 12 of the power supplier 2 and the vehicle-side coil unit 18 of the power receiver 4 may include the first and second coils 31 and 32.

While in this embodiment of the present invention, the second coils 32 are provided on the right and left sides of the first coil 31, a second coil 32 may be provided only on one side.

While in this embodiment of the present invention, an example has been described using the core in a polygonal shape, for example, the core may also be formed in any other shape such as a cylindrical shape.

Any of the various embodiments described above may be combined as appropriate to achieve their advantages in combination.

A plate made of a non-magnetic material such as aluminum may be disposed around the ground-side coil unit 12 and the vehicle-side coil unit 18 to further reduce the leakage magnetic flux.

### INDUSTRIAL APPLICABILITY

A non-contact power transmission system according to the present invention is useful as, for example, a power receiver and a power supplier of an electric propulsion vehicle, which may be incautiously accessed by a human or an object.

### DESCRIPTION OF REFERENCE CHARACTERS

- 2: Power Supplier
- 4: Power Receiver
- 6: Commercial Power Supply
- 8: Power Unit
- 10: Inverter Section
- 12: Ground-Side Coil Unit (Power Transmitting Coil)
- 16: Supplier-Side Controller
- 17: Power Control Section
- 18: Vehicle-Side Coil Unit (Power Receiving Coil)
- 20: Rectifier
- 22: Battery
- 24: Receiver-side Controller
- 30: Wire
- 31: First Coil
- 32: Second Coil
- 33: Core
- 40: Magnetic Flux
- 41: Leakage Magnetic Flux

## Claims

1. A non-contact power transmission system including a power transmitting coil, and a power receiving coil facing the power transmitting coil, and transmitting electric power from the power transmitting coil to the power receiving coil via a non-contact method by utilizing electromagnetic induction, wherein
at least one of the power transmitting and receiving coils includes
a first coil in which a wire is wound around a first core, and
a second coil in which a wire is wound around a second core, the second coil being placed at at least one end of a winding axis of the first coil,
a winding axis of the second coil is inclined with respect to the winding axis of the first coil toward the power transmitting or receiving coil that faces the second coil.

2. The non-contact power transmission system of claim 1, wherein
the winding axis of the second coil is inclined, with respect to the winding axis of the first coil, perpendicularly to the power transmitting or receiving coil that faces the second coil.

3. The non-contact power transmission system of claim 1, wherein
the first and second cores are configured as an identical continuous member.

4. The non-contact power transmission system of claim 1, wherein
the wires of the first and second coils are wound in an identical direction, and currents flow in an identical direction through the wires of the first and second coils.

5. The non-contact power transmission system of claim 1, wherein
the wires of the first and second coils are wound in opposite directions, and currents flow in opposite directions through the wires of the first and second coils.
